# EUROPÄISCHE PATENTSCHRIFT

(11) **EP 2 046 614 B1**
(45) Veröffentlichungstag und Bekanntmachung des Hinweises auf die Patenterteilung: **12.05.2010**
(21) Anmeldenummer: 07801154.1
(22) Anmeldetag: 12.07.2007
(51) Int. Cl.: B60S 9/08

(54) **FUSSEINRICHTUNG ZUR ABSTÜTZUNG EINER STÜTZ- ODER HUBEINRICHTUNG**
FOOT DEVICE FOR SUPPORTING A SUPPORT DEVICE OR LIFTING DEVICE
DISPOSITIF DE BASE POUR SUPPORTER UN DISPOSITIF DE SUPPORT OU DE LEVAGE

(30) Priorität: 31.07.2006 DE 102006035918
(43) Veröffentlichungstag der Anmeldung: 15.04.2009
(73) Patentinhaber: Haacon Hebetechnik GmbH, 97896 Freudenberg/Main (DE)
(72) Erfinder: BIRKHOLZ, Holger, 97906 Faulbach (DE); MILTENBERGER, Robert, 63897 Miltenberg (DE); NATTERER, Ralf, 63853 Mömlingen (DE); TRUNK, Gerhard, 97903 Collenberg (DE)
(74) Vertreter: Tappe, Hartmut
(86) Internationale Anmeldenummer: PCT/DE2007/001248
(87) Internationale Veröffentlichungsnummer: WO 2008/014747

(56) Entgegenhaltungen:
- EP-A- 1 598 304
- DE-A1- 3 119 359
- DE-A1- 19 839 359

## Beschreibung

Die vorliegende Erfindung betrifft eine Fußeinrichtung zur Abstützung einer Stütz- oder Hubeinrichtung, insbesondere eine Sattelstütze oder dergleichen, mit einer Fußaufnahme zur Verbindung eines Schwenkfußes mit einem Stützrohr der Hubeinrichtung. Dokument DE 19 839 359 A1 offenbart eine Hubeinrichtung gemäß dem Oberbegriff des Anspruchs 1.

Hubeinrichtungen, die mit Fußeinrichtungen der eingangs genannten Art versehen sind, werden in der Anwendung als Sattelstütze beispielsweise als höhenverstellbare Abstützeinrichtungen für so genannte "Sattelauflieger" verwendet, wenn diese unabhängig von einem Fahrzeug abgestellt werden. Dabei kommt den Fußeinrichtungen zum einen die Aufgabe zu, eine von der Beschaffenheit des Untergrunds weitgehend unabhängige, sichere Abstützfläche zu realisieren. Hierzu müssen die Fußeinrichtungen einerseits über eine entsprechend belastbare Abstützfläche verfügen. Andererseits müssen die Fußeinrichtungen eine Anpassung an unterschiedliche Geländeneigungen ermöglichen.

Eine besondere Bedeutung kommt bei den Fußeinrichtungen der sogenannten Fußaufnahme zu, die eine Verbindung des Schwenkfußes mit dem Stützrohr herstellt. Da es sich somit bei der Fußaufnahme um ein zwischen dem Schwenkfuß und dem Stützrohr angeordnetes Bauteil handelt, ist die Gestaltung der Fußaufnahme von wesentlicher Bedeutung für die Bauhöhe der gesamten Hubeinrichtung. Zur Gestaltung einer effektiven Hubeinrichtung ist es grundsätzlich wünschenswert, ein möglichst großes Hubhöhen-/Bauhöhenverhältnis zu realisieren, um eine platzsparende Unterbringung der Hubeinrichtung bei maximierter Hubhöhe zu ermöglichen.

Aufgabe der vorliegenden Erfindung ist es daher, eine Fußeinrichtung vorzuschlagen, die aufgrund der Gestaltung der Fußaufnahme möglichst wenig zur Bauhöhe der Hubeinrichtung beiträgt.

Diese Aufgabe wird durch eine Fußeinrichtung mit den Merkmalen des Anspruchs 1 gelöst.

Bei der erfindungsgemäßen Fußeinrichtung ist die Fußaufnahme mit einem Einschubkörper zum Einschub in das Stützrohr versehen, der in zwei durch ein Spindeldurchtrittsbereich einer Hubspindel voneinander beabstandeten Stützrohreingriffsbereichen Laschenaufnahmen zur Aufnahme von Schwenklaschen des Schwenkfußes aufweist, wobei die Schwenklaschen längs einer Schwenkachse verliersicher mit dem Einschubkörper verbunden sind und die Laschenaufnahmen konzentrisch zur Schwenkachse angeordnete Gegenstützflächen aufweisen, die zur Übertragung der Stützkräfte mit entsprechenden, durch die Außenkontur der Schwenklaschen gebildeten Stützflächen korrespondieren.

Die erfindungsgemäß gestaltete Fußeinrichtung ermöglicht aufgrund der Laschenabstützung im Unterschied zu der im Stand der Technik üblichen Abstützung über eine biegesteife Achse eine besonders schmale Bauweise der Fußaufnahme, sodass ein wesentlicher Anteil der Fußaufnahme einschließlich des zwischen dem Schwenkfuß und der Fußaufnahme ausgebildeten Kraftübertragungsbereichs in dem als Einschubkörper realisierten Bereich der Fußaufnahme ausgebildet sein kann. Somit kann der aus dem Stützrohr herausragende, die Bauhöhe der Hubeinrichtung beeinflussende Anteil der Fußaufnahme in seiner Baugröße wesentlich reduziert werden.

Wenn darüber hinaus der Einschubkörper napfartig ausgebildet ist, mit einer Bodenwandung und einem zur Ausbildung der Stützrohreingriffsbereiche dienenden Eingriffsrahmen, kann die Fußeinrichtung bei reduzierter Gewichtsauslegung gleichzeitig den unteren Abschluss des Stützrohr bilden, um den Stützrohrinnenraum gegen das Eindringen von Verschmutzung abzudichten.

Wenn der Einschubkörper an seinem äußeren Umfangsrand mit einem Stützbund zur Anlage an einem Stirnende des Stützrohrs versehen ist, ist nicht nur für eine definierte Relativanordnung gegenüber dem Stützrohr gesorgt, vielmehr erfolgt auch die Krafteinleitung in das Stützrohr über den Stützbund.

Besonders vorteilhaft ist es, wenn die Laschenaufnahmen taschenförmig in den Stützrohreingriffsbereichen ausgebildet sind, sodass in jedem Fall Relativbewegungen zwischen den Schwenklaschen des Schwenkfußes und der Innenwandung des Stützrohres, die ein Eindringen von Schmutz in das Stützrohr ermöglichen könnten, unterbleiben.

Besonders vorteilhaft für die einwandfreie Funktion des Schwenkfußes mit einer unbehinderten Schwenkbewegung im unbelasteten Zustand der Hubeinrichtung ist es, wenn die Schwenklaschen des Schwenkfußes über querkraftfreie Bolzenverbindungen mit den Stützrohreingriffsbereichen der Fußaufnahme verbunden sind. Hierdurch wird nämlich sicher gestellt, dass Bolzenbelastungen im Moment der Krafteinleitung, also des Auftreffens des Schwenkfußes auf den Untergrund, die zu einer auch das freie Verschwenken des Schwenkfußes beeinträchtigenden Verformung des Bolzenverbindungsbereichs führen könnten, unterbleiben.

Nachfolgend wird eine bevorzugte Ausführungsform der Fußeinrichtung anhand der Zeichnungen näher erläutert.

Es zeigen:
- **Fig. 1**: eine Hubeinrichtung mit einer Fußeinrichtung in Vor- deransicht;
- **Fig. 2**: die **Fig. 1** dargestellte Hubeinrichtung als Längs- schnittdarstellung gemäß Schnittlinienverlauf II-II in **Fig. 1****;**
- **Fig. 3**: ein Schaftrohr der in **Fig. 1** dargestellten Hubeinrich- tung im Querschnitt;
- **Fig. 4**: eine alternative Querschnittsausbildung des in **Fig. 3** dargestellten Schaftrohr-Querschnitts;
- **Fig. 5**: eine Seitenansicht der in **Fig. 1** dargestellten Fußein- richtung gemäß Ansicht V in **Fig. 1****;**
- **Fig. 6**: die in **Fig. 5** dargestellte Fußeinrichtung in Seitenan- sicht.

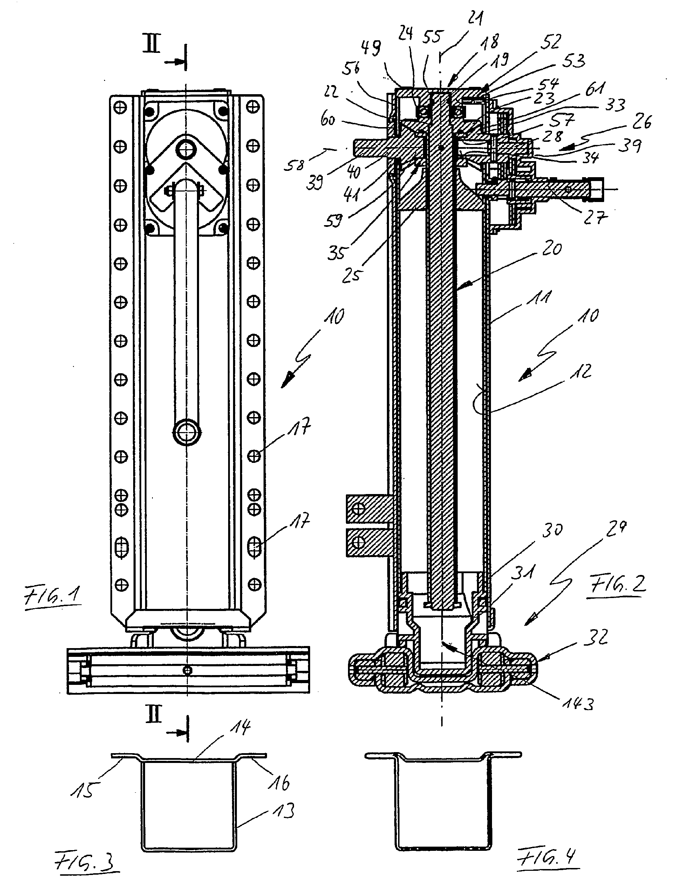

Aus einer Zusammenschau der **Fig. 1** und **2** ergibt sich der Aufbau einer Hubeinrichtung 10 mit einem Schaftrohr 11 und einem koaxial im Schaftrohr 11 angeordneten Stützrohr 12. Das Schaftrohr 11 ist gemäß dem in **Fig. 3** ausgeführten Ausführungsbeispiel aus einem U-förmigen Schaftrohrprofil 13 und einer das Profil 13 zu einem Vierkantrohr ergänzenden Montageplatte 14 zusammengesetzt, die gleichzeitig die Rückwand des Schaftrohrs 11 bildet. Die Montageplatte 14 dient zum Anschluss an ein Fahrzeugchassis und weist an seitlich ausgebildeten Anschlussleisten 15, 16 eine Vielzahl von Möntagebohrungen 17 auf, die eine Verbindung an unterschiedlich ausgebildeten Fahrzeugchassis bzw. in unterschiedlichen Montagehöhen an einem Fahrzeugschassis ermöglichen.

Wie sich insbesondere aus der in **Fig. 2** gezeigten Schnittdarstellung ergibt, erstreckt sich das im Schaftrohr 11 aufgenommene Stützrohr 12 im Wesentlichen über die gesamte Länge des Schaftrohrs 11. Wie aus **Fig. 2** ferner ersichtlich, weist das Schaftrohr 11 quasi als stirnseitigen Abschluss eine Druckplatte 18 auf, die zur Aufnahme eines oberen Hubspindelendes 19 einer Hubspindel 20 dient, die sich auf einer Längsachse 21 der Hubeinrichtung 10 bzw. des Stützrohrs 12 erstreckt. Am oberen Hubspindelende 19 befindet sich ferner ein auf einem Wellenbund 22 drehfest angeordnetes Hubspindelzahnrad 23, das zum Antrieb der Hubspindel 20 dient und sich zusammen mit der Hubspindel 20 über ein Axiallager 24 an der Druckplatte 18 abstützt.

Auf der Hubspindel 20 ist eine Spindelmutter 25 angeordnet, die an ihrem Umfang drehstarr mit dem Stützrohr 12 verbunden ist, so dass eine Rotation der Hubspindel 20 in Folge eines Antriebs des Hubspindelzahnrads 23 über den Gewindeeingriff der Hubspindel 20 mit der Spindelmutter 25 je nach Drehrichtung ein Ausfahren oder Einfahren des Stützrohrs 12 aus dem Schaftrohr 11 hinaus oder in dieses hinein bewirkt.

Zum Antrieb des Hubspindelzahnrads 23 dient ein unterhalb der Druckplatte 18 angeordnetes Hubgetriebe 26, das eine Antriebswellenanordnung 27 und eine Abtriebswellenanordnung 28, die auf das Hubspindelzahnrad 23 wirkt, umfasst.

Am unteren Ende des Stützrohres 12 befindet sich eine Fußeinrichtung 29, die eine mit einem unteren Stirnende 30 des Stützrohres 12 verbundene Fußaufnahme 31 sowie einen mit der Fußaufnahme 31 verbundenen Schwenkfuß 32 aufweist.

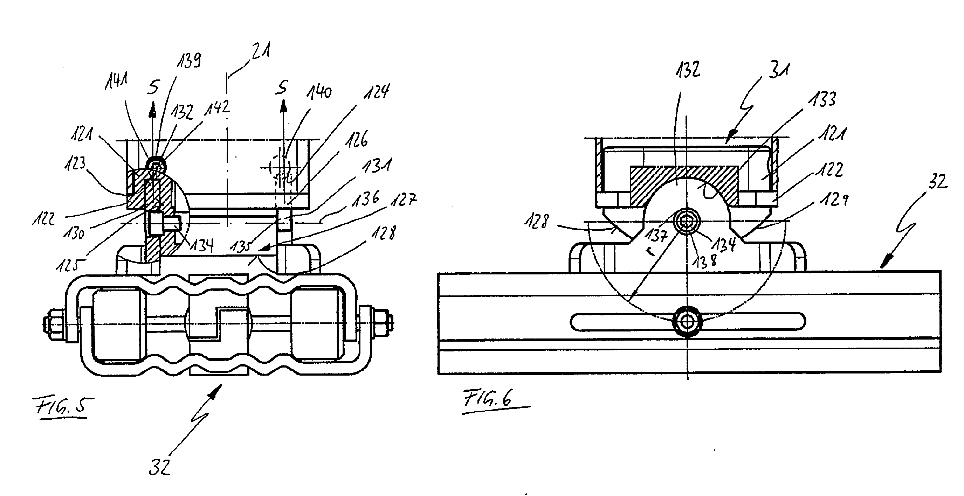

In den **Fig. 5** und **6** ist die am unteren Stirnende 30 des Stützrohrs 12 angeordnete Fußeinrichtung 29 detailliert dargestellt. Aus der Zusammenschau der **Fig. 5** und **6** ergibt sich, dass die Fußaufnahme 31 mit einem Einschubkörper 120, der zur Ausbildung eines Spindeldurchtrittsbereichs 143 (**Fig. 2**) im Fall des vorliegenden Ausführungsbeispiels napfartig ausgebildet ist, so in das Stützrohr 12 eingesetzt ist, dass ein Eingriffsrahmen 121, an dessen unterem Ende außen umlaufend ein Stützbund 122 ausgebildet ist, bis zur Anlage des Stützbunds 122 am Stirnende 30 in das Stützrohr 12 eingreift. In zwei einander gegenüberliegenden Stützrohreingriffsbereichen des Eingriffsrahmens 121 sind zwei taschenförmige, im Falle des vorliegenden Ausführungsbeispiels annähernd scheibensegmentförmige Laschenaufnahmen 123, 124 ausgebildet. Jeweils zueinander parallele, der Längsachse 21 des Stützrohrs 12 zugewandte Laschenaufnahmewandungen sind durch parallele Seitenwände 125 und 126 eines aus dem Stützrohr 12 nach unten vorragenden Schwenkfußanschlussteils 127 der Fußaufnahme 31 gebildet. Zwischen den Seitenwänden 125, 126 verläuft eine konvex tonnenförmige Bodenwandung 128, deren Kontur 129 entsprechend dem Schwenkradius r des Schwenkfußes 32 ausgebildet ist.

Wie insbesondere aufgrund der Darstellung gemäß **Fig. 5** nachvollziehbar wird, erfolgt die Kraftübertragung vom Schwenkfuß 32, der mit seinen Schwenklaschen 130, 131 in die Laschenaufnahmen 123 und 124 eingreift, über konvex bogenförmige, durch den Oberrand der Schwenklaschen 130, 131 gebildete Stützflächen 132 auf die entsprechend konkav ausgebildeten, durch den Ausnehmungsgrund gebildete Gegenstützflächen 133 der Laschenaufnahmen 123 und 124. Die in **Fig. 5** eingezeichnete Stützkraft S wird also als reine Querkraft vom Schwenkfuß 32 auf die Fußaufnahme 31 übertragen.

Zwischen den Schwenklaschen 130, 131 und den Seitenwänden 125, 126 des Schwenkfußanschlussteils 127 ausgebildeten Bolzenverbindungen 134, 135 dienen nur zur verliersicheren Verbindung zwischen der Fußaufnahme 31 und dem Schwenkfuß 32 bei unbelastetem Schwenkfuß 32, also wenn der Schwenkfuß 32 von einem Untergrund abgehoben ist. In diesem stützlastfreien Zustand dienen die Bolzenverbindungen 134 und 135 auch zur Ausbildung einer Schwenkachse 136, um die der Schwenkfuß 32 zur Anpassung an eine Neigung des Untergrunds im Moment des Aufsetzens schwenken kann. Im belasteten Zustand der Hubeinrichtung 10 sind die Bolzenverbindungen 134, 135 lastfrei, da in den Schwenklaschen 130, 131 ausgebildete Bolzenbohrungen 137 im Durchmesser größer ausgebildet sind als ein Bolzenkopf 138. Dabei ist das Spiel der Bolzenbohrung 137 gegenüber dem Bolzenkopf 138 so bemessen, dass einerseits im betriebslastenfreien Zustand der Hubeinrichtung die Schwenklaschen 130, 131 ohne Berührungskontakt zu den Gegenstützflächen 133 der Laschenaufnahme 123, 124 verschwenken können, und andererseits, dass nach dem Aufsetzen des Schwenkfußes 32 auf einem Untergrund, also im belasteten Zustand der Hubeinrichtung, ein Berührungskontakt zwischen den Stützflächen 132 der Schwenklaschen 130, 131 und den Gegenstützflächen 133 der Laschenaufnahmen 123, 124 besteht.

Ebenfalls nur zur verliersicheren Verbindung der Fußaufnahme 31 mit dem Stützrohr 12 im betriebslastfreien Zustand der Hubeinrichtung dienen zwischen dem Eingriffsrahmen 121 der Fußaufnahme 31 und dem Stützrohr 12 vorgesehene Bolzenverbindungen 139, 140, die daher ebenso in der Wandung des Stützrohrs 12 eingebrachte Bolzenbohrungen 141 aufweisen, die einen im Vergleich zu einem Bolzenkopf 142 vergrößerten Durchmesser aufweisen.

## Patentansprüche

1. Fußeinrichtung (29) zur Abstützung einer Stütz- oder Hubeinrichtung, insbesondere eine Sattelstütze oder dergleichen, mit einer Fußaufnahme (31) zur Verbindung eines Schwenkfußes (32) mit einem Stützrohr (12) der Hubeinrichtung (10),
**dadurch gekennzeichnet,**
**dass** die Fußaufnahme einen Einschubkörper (120) zum Einschub in das Stützrohr aufweist, der in zwei durch einen Spindeldurchtrittsbereich (143) einer Hubspindel (20) voneinander beabstandeten Stützrohreingriffsbereichen Laschenaufnahmen (123, 124) zur Aufnahme von Schwenklaschen (130, 131) des Schwenkfußes aufweist, wobei die Schwenklaschen längs einer Schwenkachse (136) verliersicher mit dem Einschubkörper verbunden sind und die Laschenaufnahmen konzentrisch zur Schwenkachse angeordnete Gegenstützflächen (133) aufweisen, die zur Übertragung der Stützkräfte mit entsprechenden, durch die Außenkontur der Schwenklaschen gebildeten Stützflächen (132) korrespondieren.

2. Fußeinrichtung nach Anspruch 1,
**dadurch gekennzeichnet,**
**dass** der Einschubkörper (120) napfartig ausgebildet ist, mit einer Bodenwandung (128) und einem zur Ausbildung der Stützrohreingriffsbereiche dienenden Eingriffsrahmen (121).

3. Fußeinrichtung nach einem der vorangehenden Ansprüche,
**dadurch gekennzeichnet,**
**dass** der Einschubkörper (120) an seinem äußeren Umfangsrand mit einem Stützbund (122) zur Anlage an einem Stirnende (30) des Stützrohrs (12) versehen ist.

4. Fußeinrichtung nach einem der vorangehenden Ansprüche,
**dadurch gekennzeichnet,**
**dass** die Laschenaufnahmen (123, 124) taschenförmig in den Stützrohreingriffsbereichen ausgebildet sind.

5. Fußeinrichtung nach einem der vorangehenden Ansprüche,
**dadurch gekennzeichnet,**
**dass** die Schwenklaschen (130, 131) des Schwenkfußes (32) über querkraftfreie Bolzenverbindungen (134, 135) mit den Stützrohreingriffsbereichen der Fußaufnahme (31) verbunden sind.

## Claims

1. A foot device (29) for supporting a support device or lifting device, in particular a semitrailer support or the like, comprising a foot receptacle (31) for connecting a pivoting foot (32) to a support tube (12) of the lifting device (10),
**characterized in that**
the foot receptacle comprises an insertion body (120) for insertion into the support tube comprising, in two support tube engagement areas spaced apart from one another by a spindle passage area (143) of a lifting spindle (20), bracket receptacles (123, 124) for receiving pivoting brackets (130, 131) of the pivoting foot, wherein the pivoting brackets are connected in a captive manner to the insertion body along a pivoting axis (136), and the bracket receptacles comprise counter support faces (133) which are arranged concentrically with respect to the pivoting axis and which, for transmitting the supporting forces, correspond with respective support faces (132) formed by the outer contour of the pivoting brackets.

2. The foot device according to claim 1,
**characterized in that**
the insertion body (120) is formed cup-shaped with a bottom wall (128) and an engagement frame (121) serving for forming the support tube engagement areas.

3. The foot device according to any one of the preceding claims,
**characterized in that**
the insertion body (120) is provided with a support collar (122) on its circumferential periphery for abutting against a front end (30) of the support tube (12).

4. The foot device according to any one of the preceding claims,
**characterized in that**
the bracket receptacles (123, 124) are formed pocket-shaped within the support tube engagement areas.

5. The foot device according to any one of the preceding claims,
**characterized in that**
the pivoting brackets (130, 131) of the pivoting foot (32) are connected with the support tube engagement areas of the foot receptacle (31) via pin connections (134, 135) free of transverse forces.

## Revendications

1. Dispositif de pied (29) pour supporter un dispositif de support ou de levage, notamment un support de remorque ou similaire, comprenant un logement de pied (31) pour la connexion d'un pied pivotant (32) à un tube de support (12) du dispositif de levage (10),
**caractérisé en ce que**
le logement de pied présente un corps d'insertion (120) pour l'insertion dans le tube de support, le corps d'insertion présentant, dans deux régions d'engagement de tube de support espacées l'une de l'autre par une région de traversée de broche (143) d'une broche de levage (20), des logements de pattes (123, 124) pour recevoir des pattes pivotantes (130, 131) du pied pivotant, les pattes pivotantes étant connectées le long d'un axe de pivotement (136) de manière imperdable au corps d'insertion et les logements de pattes présentant des surfaces de contre-support (133) qui sont disposées concentriquement à l'axe de pivotement et qui correspondent avec des surfaces de support (132) correspondantes formées par le contour extérieur des pattes pivotantes, pour le transfert des forces de support.

2. Dispositif de pied selon la revendication 1,
**caractérisé en ce que**
le corps d'insertion (120) est conçu sous la forme d'un godet avec une paroi de fond (128) et un cadre d'engagement (121) servant pour la formation des régions d'engagement de tube de support.

3. Dispositif de pied selon l'une quelconque des revendications précédentes,
**caractérisé en ce que**
le corps d'insertion (120) est muni à son rebord périphérique extérieur avec une collerette de support (122) pour l'appui contre une extrémité frontale (30) du tube de support (12).

4. Dispositif de pied selon l'une quelconque des revendications précédentes,
**caractérisé en ce que**
les logements de pattes (123, 124) sont agencés en forme de poche dans les régions d'engagement de tube de support.

5. Dispositif de pied selon l'une quelconque des revendications précédentes,
**caractérisé en ce que**
les pattes pivotantes (130, 131) du pied pivotant (32) sont connectées aux régions d'engagement de tube de support du logement de pied (31) à l'aide de connexions à goujon (134, 135) dépourvues de forces latérales.
